# EUROPEAN PATENT SPECIFICATION

(11) **EP 2 554 312 B1**
(45) Date of publication and mention of the grant of the patent: **02.09.2015**
(21) Application number: 12178184.3
(22) Date of filing: 27.07.2012
(51) Int. Cl.: B23D 47/12, B27B 5/065, B27G 19/00, B27G 19/08, B23D 45/10, B27G 19/10, B27B 5/075

(54) **Method and apparatus to cut panels**
Verfahren und Vorrichtung zum Schneiden von Platten
Méthode et appareil pour découper des panneaux

(30) Priority: 05.08.2011 IT MO20110203
(43) Date of publication of application: 06.02.2013
(73) Proprietor: SCM Group S.p.A., 47900 Rimini (IT)
(72) Inventor: Maioli, Fabio, 47822 Santarcangelo di Romagna (RN) (IT)
(74) Representative: Villanova, Massimo

(56) References cited:
- EP-A1- 1 810 769
- EP-A2- 0 395 617
- EP-A2- 0 947 273
- DE-A1- 2 636 529
- DE-A1-102009 033 649

## Description

### Background of the invention

The invention relates to a method and an apparatus for machining panels, in particular for cutting a panel or a pack of panels (for example of rectangular shape) of large dimensions into various smaller panels or packs of panels (that are, for example, also rectangular in shape), generally of different sizes from one another.

Specifically, but not exclusively, the invention can be advantageously applied in panels made of wood or of material that is similar to wood, for example, in the context of a system for cutting a panel of large dimensions into panels of smaller sizes, in order to perform automatically the so-called "Z-cut" of a panel, i.e. a second cutting stroke, along a panel edge that has already been cut before, to reduce the width of the panel to the desired value. Cutting a panel of large dimensions into several panel strips that are then cut further (with through cuts that are transverse to the length of the strip) to obtain the panels with the desired sizes is in fact known; sometimes, nevertheless, the desired width of one (or more) of the panels obtained from a strip is slightly less than the width of the strip, so the panel will have to be machined further, to reduce the width thereof, by means of an operation of removal of material (commonly called "Z-cut") performed along the longitudinal edge of the panel that was already cut previously.

The invention relates in particular to a method according to the preamble of claim 1 and to an apparatus according to the preamble of claim 9. A method and an apparatus of this type are shown, for example, by patent publication DE 10 2009 033 649 A.

One of the problems of the prior art is to optimise the cutting operations to cut a panel, or a pack of panels - i.e. the operations for dividing the panel in such a manner as to form a plurality of panels or packs of panels of 1120733be-EP smaller size - in order to reduce both machining time and machining chips. It is known to initially perform first (linear) cuts on the panel, or pack of panels, to form strips, i.e. portions of panel or of pack of panels, generally elongated into strips, from which further smaller portions are subsequently separated by second linear cuts (transverse to the strips) that are orthogonal to the first cuts, to obtain the panels of the desired sizes.

In the context of this problem there is, as already said, the further problem of forming, from a strip (ie. from a panel element, for example an already cut portion of panel or of pack of panels) having a defined width (i.e. the dimension in a direction that is orthogonal to the direction of the first cut), one or more smaller panels with a smaller width than the width of the strip from which the panel is separated. In this case in fact, in addition to cutting the strip with one or several second cuts that are transverse to the strip and orthogonal to the first cuts, a further machining must be performed (i.e. the "Z-cut") to reduce the width of the cut panel to the desired value. It is known to perform this further machining ("Z-cut") at the end of the various panel-forming operations (first and second cuts), thus reducing the degree of automation of the process and increasing the risk of error.

EP 1810769 proposes a solution to the problem of performing the aforementioned further machining ("Z-cut") automatically by means of a machine fitted not only with cutting tools (saw blades) to perform linear cuts but also with a further tool with the task of removing material to reduce the dimension of a portion of panel to a desired value.

Nevertheless, this solution is complicated and expensive because of the need to provide a further tool and to coordinate the operations of this further tool with the cutting tools that cut the panel or the pack of panels, into smaller elements.

### Summary of the invention

One object of the invention is to improve one or more of the aforementioned aspects of the prior art.

One advantage is to provide a method and/or an apparatus for cutting (rectangular) panels with the possibility of performing the "Z-cut" automatically.

One advantage is to make available a method and/or an apparatus that is able to perform a "Z-cut" precisely and so as to obtain panels of good quality.

Such objects and advantages, and still others, are achieved by the apparatus of claim 9 and by the method according to claim 1.

In one embodiment, a "Z-cut" is made by a circular tool (in particular of the saw type) that first forms an incision line on a (lower) side of a supporting plane of the panel, and then moves its rotation axis to the opposite (upper) side of the supporting plane of the panel to make a through cut ("Z-cut") that follows the previously formed incision line.

### Brief description of the drawings

The invention can be better understood and implemented with reference to the attached drawings that illustrate an embodiment thereof by way of non-limiting example.
Figure 1 is a diagram of a machining step for cutting a panel.
Figure 2 shows, in a top view, the diagram of the machining step in figure 1.
Figures 3A to 3E show, in a vertical elevation, five operating steps in sequence of a method example performed according to the invention.
Figures 4A to 4F show, in a top view, six operating steps in sequence of the method example shown in figures 3A to 3E.
Figures 5A and 5B show, in a side view, two operating steps of the aforesaid method example.
Figure 6 is a partial and schematic section, in a vertical elevation, of cutting means having a tool that is usable in the method of the preceding figures.

### Detailed description

With reference to the aforesaid figures, with 1 there has been generally indicated an apparatus for machining workpieces to be machined made, in particular, of wood or of a material that is similar to wood. The workpiece will, in particular, be a panel or a pack of panels stacked on top of one another. In the figures the workpiece (panel or pack of panels) has been generally indicated by 2 and hereinafter in the description it will be called "panel" for the sake of simplicity.

The machining apparatus 1 will, in this specific case, be an apparatus for cutting the panel 2 into various panels of a smaller size. In general, both the initial larger panel 2 and the smaller panels obtained by cutting may be of rectangular or at least prevalently rectangular shape.

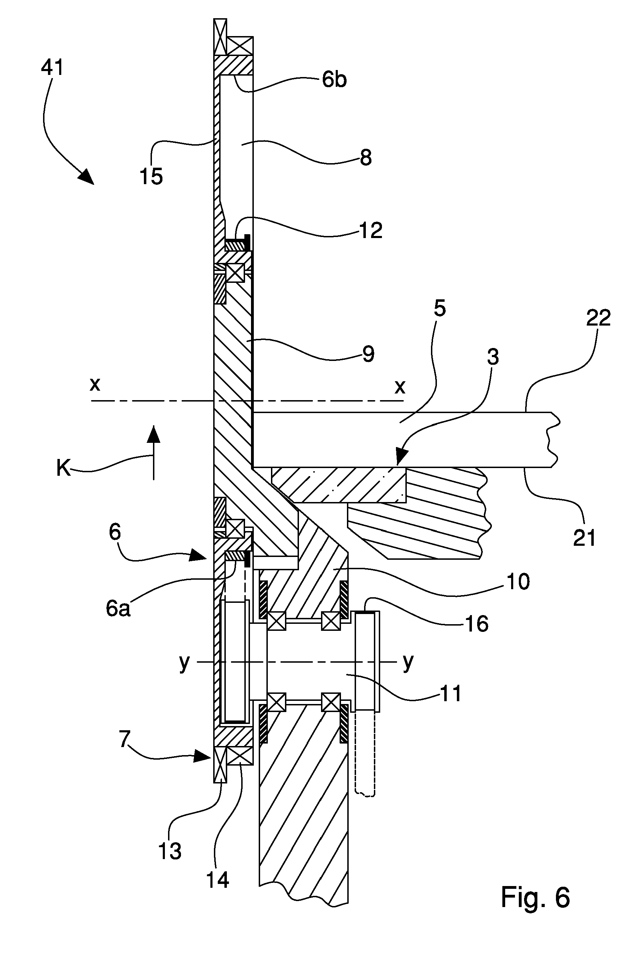

The apparatus 1 comprises a supporting plane for supporting a panel to be machined in a machining position (for example horizontal). The supporting plane, which has been schematised in figure 6 and indicated with 3, may be, for example, a supporting plane used in any known panel-cutting apparatuses to support the panel or pack of panels to be cut.

The apparatus 1 further comprises a supplying device (which is not shown) for moving the panel on the supporting plane in a supplying direction F. This supplying direction F may be, in particular, horizontal and parallel to the supporting plane 3. The supplying device may comprise, for example, a conveyor of commonly used panels or packs of panels in a panel-cutting apparatus.

The apparatus 1 may comprise other elements that are commonly used in known panel-cutting apparatuses, such as, for example, a device for locking panels in the machining position, and/or a device for orienting already cut portions in order to make further cuts that are orthogonal to the first, and/or a device for inserting workpieces to be machined and/or a device for evacuating machined workpieces, etc.

The apparatus 1 comprises a machining unit 4 that is movable in a machining direction G that is parallel to the supporting plane 3 and transverse (for example perpendicular) to the supplying direction F, to machine the panel 2 on the supporting plane 3. The machining unit 4 carries first rotating cutting means 41 (for example of the saw blade type) to perform on the panel a pre-incision parallel to the machining direction G. The machining unit 4 carries second rotating cutting means 42 (for example of the saw blade type), arranged aligned with the first cutting means 41 in the machining direction G, to perform a through separating cut along the pre-incision and separate an end portion 5 (or strip) from the panel 2.

With reference to figure 6, one embodiment of the first cutting means 41 will now be disclosed in greater detail that in the specific case comprises a disc 6 on a peripheral zone of which a circular tool 7 operates, for example of the saw type.

The disc 6 has a rotation axis x-x and the circular tool 7 is coaxial with the rotation axis x-x. The disc 6 has a central zone with an opening and an intermediate zone (interposed between the peripheral zone and the central zone) with an (annular) cavity 8 open on a side of the disc and extending (with a closed loop) around the rotation axis x-x.

The disc 6 is mounted with the possibility of rotation on supporting means having a hub portion 9 inserted into the aforesaid opening in the centre of the disc 6. The latter is rotatably coupled on the hub portion 9 around the aforesaid rotation axis x-x. The supporting means further comprises a shaft supporting portion 10 arranged facing the intermediate disc zone on the aforesaid side on which the cavity 8 is arranged.

A rotation shaft 11 is rotatably supported by the shaft supporting portion 10. The rotation shaft 11 has an end that may extend as far as the inside of the cavity 8. This end is connected to the disc 6 to rotate the disc 6, for example by a motion transmission flexible member 12 (belt).

The disc 6 has an external cylindrical surface that bounds the annular cavity 8 internally. The external cylindrical surface is coaxial with the rotation axis x-x. The end of the shaft 11 inside the cavity 8 may be connected to the external cylindrical surface, for example by the aforesaid motion transmission flexible member 12 that will be arranged inside the cavity 8.

The hub portion 9 has an axial thickness that is not greater than the maximum axial dimension of the operating part (suitable for removing material) of the circular tool 7, where axial is intended with reference to the rotation axis x-x of the tool 7.

The hub portion 9 may have, in particular, an external diameter that is greater than 20%, or 30%, or 40%, or 50%, of the external diameter of the tool 7, and/or an external diameter that is less than 90%, or 80%, or 70%, or 60% of the external diameter of the tool 7.

The hub portion 9 may have an axial thickness that is greater than 70%, or 80%, or 90%, of the maximum axial dimension of the operating part of the circular tool 7 (cutting tool), where axial is intended with reference to the rotation axis x-x.

The disc 6 may have, as in the specific example, an internal cylindrical surface that externally bounds the annular cavity 8. The internal cylindrical surface is, in particular, coaxial with the rotation axis x-x of the disc 6 and/or of the circular tool 7.

In one example which is not shown, the aforesaid end of the shaft 11 may be connected to the internal cylindrical surface of the disc 6 by a gear coupling for transmitting motion, arranged in the cavity 8, in which, for example, a crown gear is arranged on the internal cylindrical surface.

The (material removing) tool 7 may comprise, as in this specific case, a first circular blade 13, for example a first (incision-making) saw blade, and a second circular blade 14, for example a second (chip-making) saw blade. The first blade 13 and the second blade 14 may be arranged next to one another. The first blade 13 and the second blade 14 may have different diameters from one another. In particular, the first (incision-making) blade 13 will have a greater diameter than the second (chip-making) blade 14.

The supporting means of the disc may be made, as in the specific example, in two parts that are assemblable together with the possibility of adjusting the reciprocal position thereof, in particular in a radial direction. A first part may comprise the hub portion 9 and a second part may comprise the shaft supporting portion 10. This adjusting possibility can favour the coupling between the rotation shaft 11 and the disc 6 that carries the rotating tool 7.

The tool 7 may comprise a crown that is removably splined on the periphery of the disc 6. As the crown is mounted in a disassemblable manner, it can be easily dismantled and then machined on a suitable apparatus, for example for restoring the efficiency of the saw blade/s.

The rotation shaft 11 may have a shaft axis y-y parallel to the rotation axis x-x of the disc 6. The distance of the shaft axis y-y from the rotation axis x-x may be greater than half the maximum diameter of the annular cavity 8, and/or may be greater than 40%, or 50%, or 60%, of half of the external diameter of the tool 7, and/or may be less than 90%, or 80%, or 70%, of half of the external diameter of the tool 7.

The disc 6 has a front wall 15 that closes the annular cavity 8 on the side opposite the open cavity side. The disc 6 also has a first annular wall that internally radially bounds the cavity 8 and one second annular wall that externally radially bounds the cavity 8.

The shaft supporting portion 10 may, as in this case, face the open side of the cavity 8.

The rotation shaft 11 is connected, for example by a motion transmission flexible member 16, to motor means (not shown) carried by the machining unit 4 to rotate the shaft 11.

The first cutting means 41 is carried by the machining unit with the possibility of making movements, commanded by movement means (not shown), in a (vertical) direction transverse (orthogonal) to the (horizontal) supporting plane 3 of the panel 2.

In particular, the (rotating) tool 7 may be susceptible to performing movements in a direction that is transverse to the supporting plane 3 in such a manner that the rotation axis x-x of the (rotating) tool 7 may move at least between a first position in which it is on a part (below) of the (horizontal) supporting plane 3, in this case, for example, to make an incision on a first (lower) face 21 of the end portion 5 of the panel, and a second position in which it is on an opposite part (above) of the supporting plane 3, in particular above the second (upper) face 22 of the end portion 5 of the panel, opposite the first face 21, in this case, to perform a through cut in such a manner that the cut of the tool 7 (in particular the action of the biting elements of the saw tool 7) starts from this second face 22.

In use, the apparatus 1 disclosed above implements the following method for machining panels.

At least one panel 2 (or group of panels) is positioned in a machining position on the supporting plane 3. Positioning may be performed by the supplying device that conveys the panel in the supplying direction F as far as the desired position, in which the panel 2 will be locked by locking means.

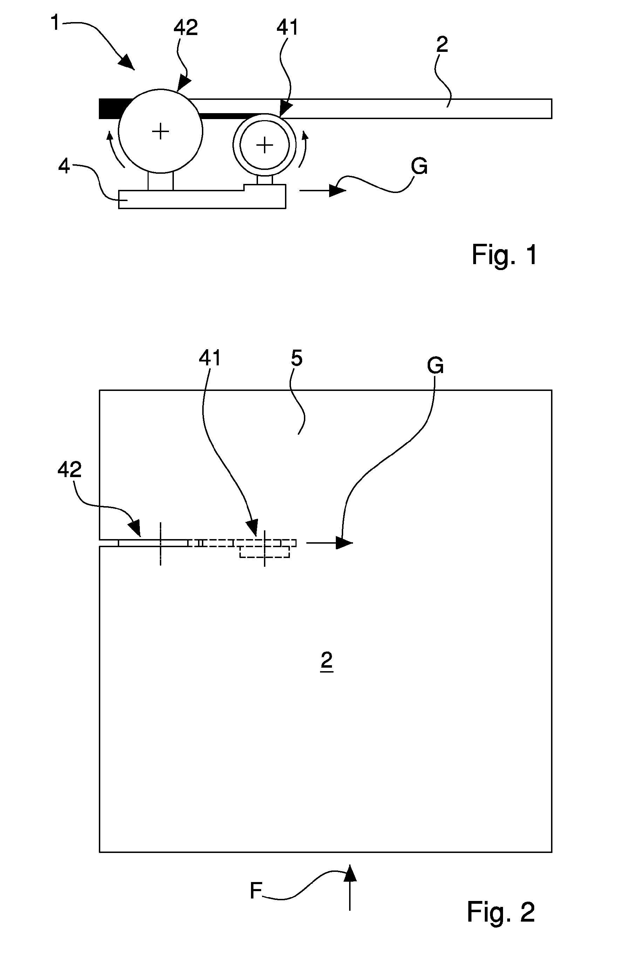

The end portion 5 is then separated from the panel in the machining position on the supporting plane by the machining unit 4, which is moved in a machining direction G and takes the first cutting means 41, which first performs the pre-incision on a (lower) face of the panel 2, and the second cutting means 42, which subsequently performs a through separating cut along the pre-incision (figures 1 and 2).

The two circular blades 13 and 14 of the tool 7, that have different diameters from one another and are arranged adjacent to one another are configured in such a manner that the tool 7 may cut, in a first step, a face of the panel by operating only with the first blade 13, with a greater diameter (whilst the second blade 14 with a smaller diameter remains at a distance from the face being machined) and may perform, in a second step, a through cut on the panel (in particular at an incision line performed previously) by operating with both blades.

The "Z-cut" is performed in the following manner.

The first cutting means 41 is positioned with the tool 7 opposite the first (lower) face 21 of the end portion 5 of the panel, in an internal zone of the face. For this purpose, after the step of separating the end portion 5 from the panel 2, the tool 7 may be moved, with at least one motion component parallel to the rotation axis x-x of the tool, to this internal zone of the first face 21, from which an incision line will depart, as will be better explained in the continuation of this description.

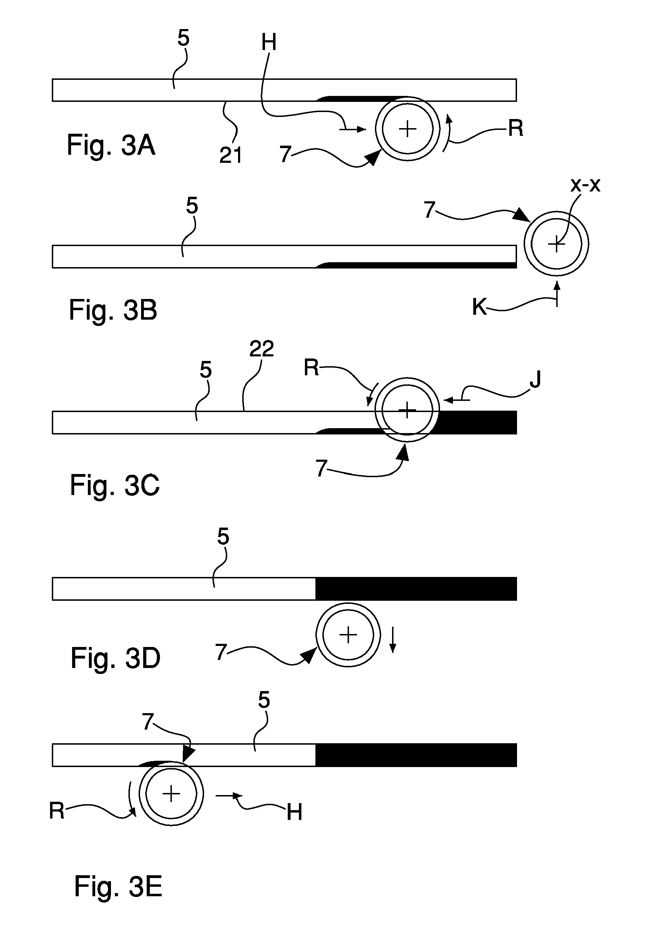

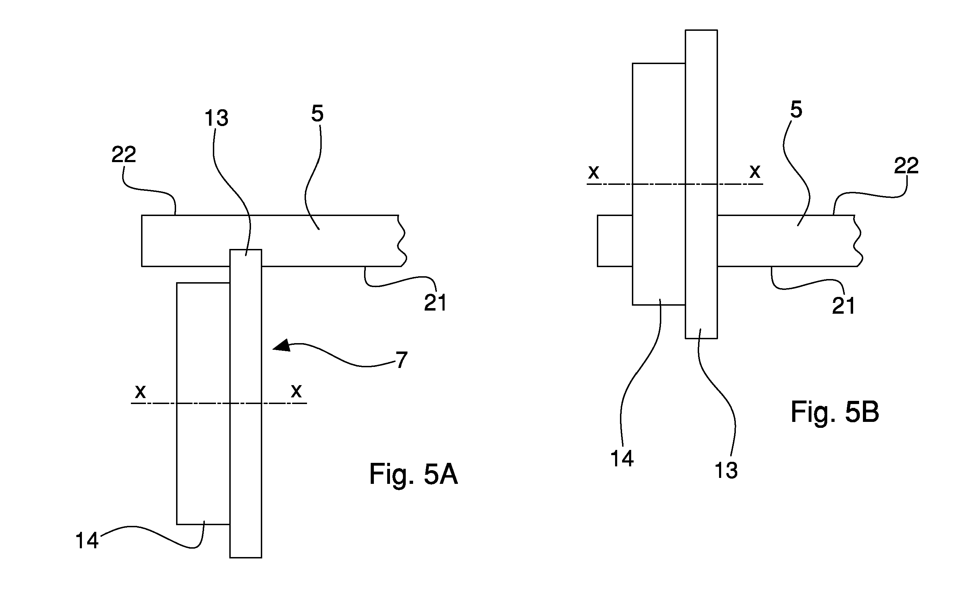

The first (lower) face 21 of the end portion 5 may be cut along at least one incision line by the same first cutting means 41 that had precut the panel 2 in operations for separating the panel 5 portions. The first cutting means 41 (comprising the tool 7) will be in particular rotated in the rotation direction R around the rotation axis x-x, in such a manner that the teeth of the tool enter the material without splintering or splitting the panel. The rotation axis x-x is at the same time moved opposite the first face 21 in a first machining direction H (figures 3A, 4A and 5A). The incision is performed starting from the aforesaid internal zone of the first face 21 as far as an end edge 5a of the face.

The rotation axis x-x of the tool 7 is then moved in a (vertical) direction K that is transverse to the (horizontal) supporting plane beyond (i.e. above in this case) the second (upper) face 22 of the end portion 5 opposite the first face 21 on which the incision (figures 3B, 4B and 5B) has been made. The rotation axis x-x of the circular tool is thus arranged above the flat (horizontal) surface of the workpiece. The tool 7 may thus enter the material to be removed in the same rotation direction R with which the tool 7 entered in the preceding incision step.

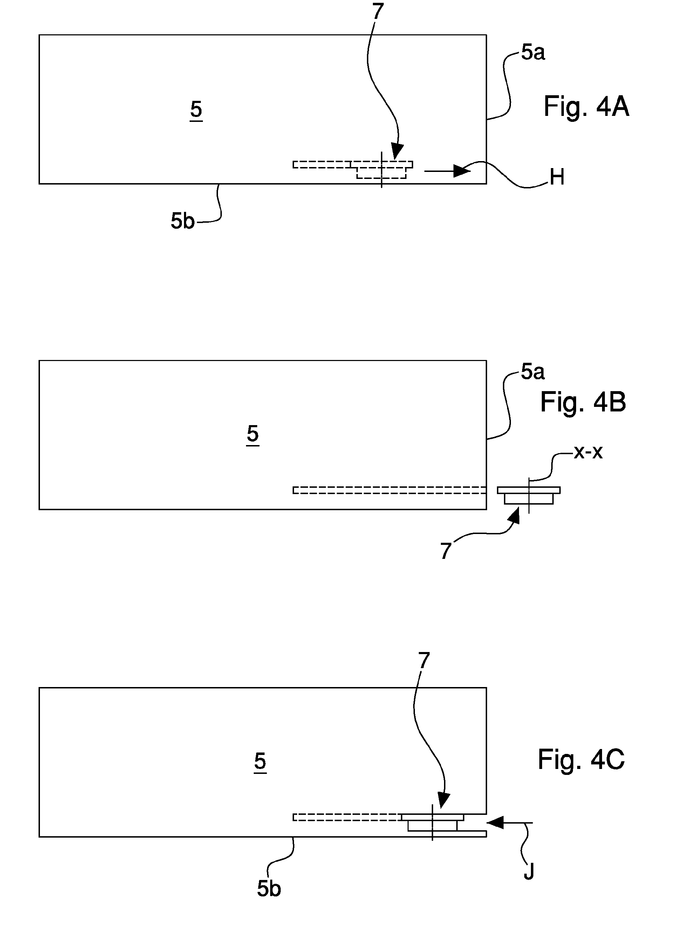

The end portion 5 is then cut with a through cut that follows the incision line, by the first cutting means 41 (having the tool 7) that is rotated in the same rotation direction R around its rotation axis, whilst the rotation axis x-x itself is moved opposite the second face 22 (figures 3C and 4C). In particular, the rotation axis x-x of the tool 7 will be moved in front of the second face 22 in a second machining direction J opposite the first machining direction H. The active circular portion of the tool 7 enters the (upper) second face 22 of the workpiece in the rotation direction R.

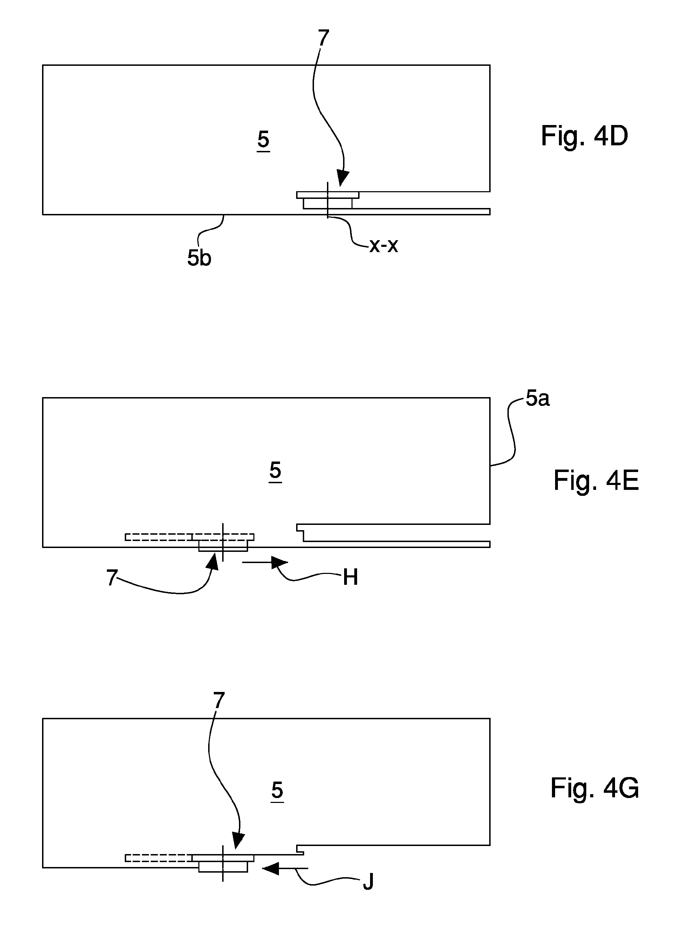

At the end of this step the tool 7 will descend to complete the (first) Z-cut (figures 3D and 4D). The end of the cutting zone that is thus obtained may have a step shape, which is due to different diameters of the circular blades 13 and 14 of the tool, but this is not important because the step is in an edge zone subsequently intended for removal to obtain the individual panel (by means of the cut that is transverse to the length of the strip).

The apparatus can be used to make two (or more) Z-cuts in the same strip of panel (or end portion 5). It is thus possible to perform the steps of making further incisions on the first face 21 of the end portion 5 along at least one second incision line (figures 3E and 4E), and to cut further with a through cut the end portion 5 along the second incision line (figure 4G).

The apparatus is controlled by a control unit that is programmed in such a manner that the second Z-cut is arranged, with respect to the first Z-cut, nearer the edge of the portion of panel from which the material is removed. This edge will hereinafter be called the chip edge 5b, in fact both the through cut made along the (first) incision line, and the through cut made along the second incision line, produce a chip that is arranged between the aforesaid incision lines and the chip edge 5b of the portion of panel. It is possible, as in this case, that the width of the active portion of the tool 7 is less than (at least) the width of the first Z-cut, so part of the material may be non-removed during this step of the Z-cut, but will be removed in at least one subsequent machining step. The incision line and the second incision line may be, as in this case, parallel to the chip edge 5b.

The apparatus is controlled by the (electronic) control unit in such a manner that the Z-cut that generates the biggest chip is performed first and ends on an edge of the panel portion adjacent to the chip edge 5b.

In the case of two, three or more Z-cuts over the same strip (end portion 5), the apparatus may be programmed to make the Z-cuts with a scaled arrangement, such that the Z-cut that generates less chip (and is thus arranged nearer the chip edge 5b) is arranged further from the aforesaid end edge 5a, adjacent to the chip edge 5b, with respect to a Z-cut that generates more chip. The various Z-cuts may in particular be parallel to one another. The apparatus may be programmed in such a manner that the Z-cut that generates less chip is performed after the Z-cut that generates more chip.

It is noted that the through cut is performed by the tool by removing material at a previously made incision line (this removal being made in particular by the same first circular blade with a greater diameter that had previously made the incision) and further by removing material at a zone devoid of an incision line (this removal in the absence of a precut zone being performed in particular by the second circular blade with a smaller diameter). The through cut performed in alignment with the incision line will on the one hand give rise to correctly cut side of the panel. Removing material where there is no precut zone cannot, on the other hand, have the same precision and correctness, but this has no importance because this more irregular removal occurs on the side of the chip edge 5b, i.e. in a zone of material intended for rejection.

The fact is emphasised that the through cut performed by the first cutting means (i.e. with the circular tool that had previously performed the incision line) occurs with the rotation axis of the tool arranged facing the face of the strip (or panel portion) opposite the face bearing the incision line. In this case the blades (of the saw type) perform the through cut correctly, maintaining the tool rotating in the same rotation direction in which it had previously rotated to make the incision line. It is further possible to terminate the Z-cut with a cut that is perfectly orthogonal to the faces of the panel.

The hub portion 9, on which the disc 6 is rotatably mounted that carries the tool 7, has a diameter that is sized so as to enable the first cutting means to move whilst the hub portion 9 traverses the gap made by the through cut and whilst the rotation axis x-x moves to a position in which it has passed the second face 22 of the panel, or panel portion. The hub portion 9 may have, for example, a diameter that is at least twice that of the thickness of the panel, or panel portion, that is being machined.

It is noted that during the various machinings disclosed above (cutting and/or incision) the reciprocal movement between the tool and the workpiece is generally provided by the movement of the tool whereas the workpiece (panel or pack of panels) remains stationary. In the context of the present invention it will obviously be possible to provide, for all the machinings disclosed above and for all the machinings claimed below, that the reciprocal workpiece-tool motion is provided by the movement of the workpiece whilst the tool remains stationary, whilst remaining within the protective scope claimed below.

## Claims

1. Method comprising the steps of:
- positioning at least one panel (2) in a machining position on a supporting plane (3);
- separating an end portion (5) from the panel (2) in the machining position by first carrying out a pre-incision and then a separating cut along the pre-incision;
- performing at least one incision line on a face (21) of the end portion (5) with a circular tool (7) driven to rotate around a rotation axis (x-x) that is moved on one side of, for example below, the supporting plane (3);
- moving said rotation axis (x-x) in a direction (K) that is transverse to said supporting plane (3) beyond the supporting plane;
**characterised by comprising the step of:**
- performing a through cut along said at least one incision line by means of said tool (7) rotated around said rotation axis (x-x) that is moved on an opposite side of, for example above, the supporting plane (3).

2. Method according to claim 1, wherein, in said steps of performing at least one incision line and performing a through cut, said tool (7) is rotated in the same rotation direction (R).

3. Method according to claim 1 or 2, wherein said pre-incision is performed by said tool (7).

4. Method according to any preceding claim, wherein said at least one incision line is performed from an internal zone of said face (21) to an end edge (5a) thereof.

5. Method according to claim 4, wherein, after said separating step and before said step of performing at least one incision line, said rotation axis (x-x) of the tool is moved to said internal zone with at least one motion component parallel to the rotation axis (x-x), the movements on one side of the supporting plane (3) and on the opposite side having directions that are opposite one another.

6. Method according to claim 4 or 5, comprising the steps of performing two or more incision lines on said face (21) and two or more through cuts respectively along said two or more incision lines, said two or more incision lines being made according to a step-like arrangement that is such that, among two incision lines, the line that is farther from said end edge (5a) is the line that is nearer a chip edge (5b) that is adjacent to said end edge and is the edge where the material chip occurs.

7. Method according to any preceding claim, wherein said tool (7) comprises at least two circular blades (13; 14) with diameters that are different from one another and are arranged adjacent to one another, and wherein in said step of performing at least one incision line only the blade with a greater diameter operates and in said step of performing a through cut both blades operate.

8. Method according to any preceding claim, wherein said steps of performing at least one incision line and performing a through cut are carried out after said separating step.

9. Apparatus, in particular for implementing the method of any preceding claim, comprising:
- a supporting plane (3) for supporting a panel (2) in a machining position;
- a machining unit (4) that is movable in a machining direction (G) parallel to the supporting plane (3) for machining the panel (2) on the supporting plane;
- first cutting means (41) carried by said machining unit (4) to perform on the panel (2) a pre-incision that is parallel to said machining direction (G);
- second cutting means (42) carried by said machining unit (4) and arranged aligned with said first cutting means (41) in said machining direction (G) to separate an end portion (5) from the panel by means of a separating cut carried out along the pre-incision;
wherein said first cutting means (41) is able to perform movements in at least one direction (K) that is transverse to the supporting plane (3) in such a manner as to move the rotation axis (x-x) thereof at least between a first position wherein the rotation axis is on one side of the supporting plane (3), and a second position wherein the rotation axis (x-x) is on an opposite side of the supporting plane (3);
**characterised in that** said first cutting means (41) comprises a rotating disc (6) on the periphery of which there is a tool (7), said disc (6) being rotatably coupled on a hub portion (9) having an axial dimension that is not greater than a maximum axial operating dimension of said tool (7) to enable said hub portion (9) to pass through a through cut made by said tool (7).

10. Apparatus according to claim 9, wherein said first cutting means (41) is able to make a through cut in said machining direction (G) with the rotation axis (x-x) in said second position.

11. Apparatus according to claim 9 or 10, wherein said first cutting means (41) is able to perform movements in said machining direction (G) in one sense to make an incision on a face (21) of the end portion (5) of the panel with the rotation axis (x-x) in said first position, and in an opposite sense to make a through cut with the rotation axis (x-x) in said second position.

12. Apparatus according to any one of claims 9 to 11, wherein the rotation axis is below the supporting plane (3) in said first position and above the supporting plane (3) in said second position.

13. Apparatus according to any one of claims 9 to 12, wherein said tool (7) has two circular blades (13; 14) of different diameters that are arranged adjacent to one another.

14. Apparatus according to any one of Claims 9 to 13, wherein said hub portion (9) has an external diameter that is greater than 20%, or 30%, or 40%, or 50%, and/or less than 90%, or 80%, or 70%, or 60%, of the external diameter of said tool (7).

## Patentansprüche

1. Verfahren, die Schritte umfassend:
- Positionieren wenigstens eines Paneels (2) in einer Bearbeitungsposition auf einer Stützfläche (3);
- Trennen eines Endteils (5) von dem Paneel (2) in der Bearbeitungsposition, indem zuerst ein Vorab-Schnitt und dann ein Trennschnitt entlang des Vorab-Schnittes durchgeführt werden;
- Durchführen wenigstens einer Schnittlinie auf einer Stirnfläche (21) des Endteiles (5) mit einem zur Rotation um eine Rotationsachse (x-x) angetriebenen kreisförmigen Werkzeuges (7), welches an einer Seite der Stützfläche (3), beispielsweise darunter, bewegt wird;
- Bewegen der Rotationsachse (x-x) in einer Richtung (K), welche quer zu der Stützfläche (3) verläuft, über die Stützfläche hinaus;
**dadurch gekennzeichnet, dass** es den Schritt umfasst:
- Durchführen eines Durchschnittes entlang der wenigstens einen Schnittlinie mittels des um die Rotationsachse (x-x) gedrehten Werkzeuges (7), das auf einer gegenüberliegenden Seite der Stützfläche (3), beispielsweise darüber, bewegt wird.

2. Verfahren nach Anspruch 1, wobei in den Schritten, wenigstens eine Schnittlinie durchzuführen und einen Durchschnitt durchzuführen, das Werkzeug (7) in der gleichen Rotationsrichtung (R) gedreht wird.

3. Verfahren nach Anspruch 1 oder 2, wobei der Vorab-Schnitt mittels des Werkzeuges (7) durchgeführt wird.

4. Verfahren nach einem vorherigen Anspruch, wobei die wenigstens eine Schnittlinie ausgehend von einer inneren Zone der Stirnfläche (21) hin zu einem Endrand (5a) derselben durchgeführt wird.

5. Verfahren nach Anspruch 4, wobei, nach dem Trennschnitt und vor dem Schritt, wenigstens eine Schnittlinie durchzuführen, die Rotationsachse (x-x) des Werkzeugs zu der internen Zone mit wenigstens einem Bewegungsanteil parallel zu der Rotationsachse (x-x) bewegt wird, wobei Bewegungen auf einer Seite der Stützfläche (3) und auf der gegenüberliegenden Seite Richtungen haben, die einander entgegengesetzt sind.

6. Verfahren nach Anspruch 4 oder 5, die Schritte umfassend, zwei oder mehr Schnittlinien auf der Stirnfläche (21) und zwei oder mehr Durchschnitte jeweils entlang der zwei oder mehr Schnittlinien durchzuführen, wobei die zwei oder mehr Schnittlinien gemäß einer schuttartigen Anordnung ausgeführt werden, die derart ist, dass bezüglich zweier Schnittlinien die Linie, welche weiter von dem Endrand (5) entfernt ist, diejenige Linie ist, welche näher zu einer Spankante (5b) liegt, die benachbart zu dem Endrand ist und der Rand ist, wo Materialspan auftritt.

7. Verfahren nach einem vorherigen Anspruch, wobei das Werkzeug (7) wenigstens zwei kreisförmige Klingen (13, 14) mit Durchmessern umfasst, die sich voneinander unterscheiden und benachbart zueinander angeordnet sind, und wobei in dem Schritt, wenigstens eine Schnittlinie durchzuführen, nur die Klinge mit dem größeren Durchmesser arbeitet und in dem Schritt, einen Durchschnitt durchzuführen, beide Klingen arbeiten.

8. Verfahren nach einem vorherigen Anspruch, wobei die Schritte, wenigstens eine Schnittlinie durchzuführen und wenigstens einen Durchschnitt durchzuführen, nach dem Trennschnitt durchgeführt werden.

9. Vorrichtung, insbesondere zum Implementieren des Verfahrens gemäß einem vorherigen Anspruch, umfassend:
- eine Stützfläche (3) zum Abstützen eines Paneels (2) in einer Bearbeitungsposition;
- eine Bearbeitungseinheit (4), die in einer Bearbeitungsrichtung (G) parallel zu der Stützfläche (3) bewegbar ist, um das Panel (2) auf der Stützfläche zu bearbeiten;
- ein erstes Schneidemittel (41), das von der Bearbeitungseinheit (4) getragen ist, um an dem Paneel (2) einen Vorab-Schnitt durchzuführen, der parallel zu der Bearbeitungsrichtung (G) ist;
- ein zweites Schneidemittel (42), das von der Bearbeitungseinheit (4) getragen und in der Bearbeitungsrichtung (G) bezüglich des ersten Schneidemittels (41) ausgerichtet ist, um einen Endteil (5) von dem Paneel zu trennen, indem entlang des Vorab-Schnittes ein Trennschnitt durchgeführt wird;
- wobei das erste Schneidemittel (41) in der Lage ist, Bewegungen in wenigstens einer Richtung (K) quer zu der Stützfläche (3) auf eine Weise durchzuführen, um die Rotationsachse (x-x) derselben wenigstens zwischen einer ersten Position, in der die Rotationsachse auf einer Seite der Stützfläche (3) liegt, und einer zweiten Position zu bewegen, in der die Rotationsachse (x-x) auf einer gegenüberliegenden Seite der Stützfläche (3) liegt;
**dadurch gekennzeichnet, dass** das erste Schneidemittel (41) eine rotierende Scheibe (6) umfasst, an deren Umfang sich ein Werkzeug (7) befindet, wobei die Scheibe (6) drehbar mit einem Nabenteil (6) gekoppelt ist, der eine axiale Abmessung aufweist, die nicht größer als eine maximale axiale Bearbeitungsabmessung des Werkzeugs ist, um zu ermöglichen, dass der Nabenteil (9) durch einen mittels des Werkzeuges (7) hergestellten Durchschnitt passt.

10. Vorrichtung nach Anspruch 9, wobei das erste Schneidemittel (41) in der Lage ist, einen Durchschnitt in der Bearbeitungsrichtung (G) mit der Rotationsachse (x-x) in der zweiten Position durchzuführen.

11. Vorrichtung nach Anspruch 9 oder 10, wobei das erste Schneidemittel (41) in der Lage ist, Bewegungen in der Bearbeitungsrichtung (G) in einer Richtung, um einen Schnitt an einer Stirnfläche (21) des Endteils (5) des Paneels mit der Rotationsachse (x-x) in der ersten Position, und in einer entgegengesetzten Richtung durchzuführen, um einen Durchschnitt mit der Rotationsachse (x-x) in der zweiten Position durchzuführen.

12. Vorrichtung nach einem der Ansprüche 9 bis 11, wobei sich die Rotationsachse unterhalb der Stützfläche (3) in der ersten Position und oberhalb der Stützfläche (3) in der zweiten Position befindet.

13. Vorrichtung nach einem der Ansprüche 9 bis 12, wobei das Werkzeug (7) zwei kreisförmige Klingen (13; 14) unterschiedlicher Durchmesser aufweist, die benachbart zueinander angeordnet sind.

14. Vorrichtung nach einem der Ansprüche 9 bis 13, wobei der Nabenteil (9) einen äußeren Durchmesser aufweist, der größer als 20% oder 30% oder 40% oder 50% und/oder kleiner als 90% oder 80% oder 70% oder 60% des äußeren Durchmessers des Werkzeugs (7) ist.

## Revendications

1. Procédé comprenant les étapes consistant à :
- positionner au moins un panneau (2) en position d'usinage sur un plan de support (3) ;
- séparer une portion d'extrémité (5) du panneau (2) en position d'usinage en réalisant d'abord une pré-incision et ensuite une coupe de séparation le long de la pré-incision ;
- réaliser au moins un trait d'incision sur une face (21) de la portion d'extrémité (5) au moyen d'un outil circulaire (7) entraîné en rotation autour d'un axe de rotation (x-x) qui est déplacé d'un côté, par exemple en dessous, du plan de support (3) ;
- déplacer ledit axe de rotation (x-x) dans une direction (K) transversale audit plan de support (3) au delà du plan de support ;
**caractérisé en ce qu'**il comprend l'étape consistant à :
- réaliser une coupe traversante le long dudit au moins un trait d'incision au moyen dudit outil (7) entraîné en rotation autour dudit axe de rotation (x-x) qui est déplacé sur un côté opposé, par exemple au dessus, du plan de support (3).

2. Procédé selon la revendication 1, dans lequel, dans lesdites étapes de réalisation d'au moins un trait d'incision et de réalisation d'une coupe traversante, ledit outil (7) est entraîné en rotation dans le même sens de rotation (R).

3. Procédé selon la revendication 1 ou 2, dans lequel ladite pré-incision est réalisée par ledit outil (7).

4. Procédé selon l'une quelconque des revendications précédentes, dans lequel ledit au moins un trait d'incision est réalisé à partir d'une zone intérieure de ladite face (21) jusqu'à un bord d'extrémité (5a) de celle-ci.

5. Procédé selon la revendication 4, dans lequel, après ladite étape de séparation et avant ladite étape de réalisation d'au moins un trait d'incision, ledit axe de rotation (x-x) de l'outil est déplacé à ladite zone intérieure avec au moins une composante de déplacement parallèle à l'axe de rotation (x-x), les déplacements d'un côté du plan de support (3) et du côté opposé ayant des directions opposées l'une à l'autre.

6. Procédé selon la revendication 4 ou 5, comprenant les étapes consistant à réaliser deux ou plusieurs traits d'incision sur ladite face (21) et deux ou plusieurs coupes traversantes respectivement le long desdits deux ou plusieurs traits d'incision, lesdits deux ou plusieurs traits d'incision étant réalisés selon un agencement en forme de marche de telle manière que, parmi deux traits d'incision, le trait le plus éloigné dudit bord d'extrémité (5a) est le trait le plus proche d'un bord de chute (5b) qui est adjacent audit bord d'extrémité et est le bord où les copeaux de matière se produisent.

7. Procédé selon l'une quelconque des revendications précédentes, dans lequel ledit outil (7) comprend au moins deux lames circulaires (13 ; 14) avec des diamètres différents l'un de l'autre et qui sont agencées adjacentes l'une à l'autre, et dans lequel dans ladite étape de réalisation d'au moins un trait d'incision seulement la lame de plus grand diamètre opère et dans ladite étape de réalisation d'une coupe traversante les deux lames opèrent.

8. Procédé selon l'une quelconque des revendications précédentes, dans lequel lesdites étapes de réalisation d'au moins un trait d'incision et de réalisation d'une coupe traversante sont effectuées après ladite étape de séparation.

9. Appareil, notamment pour la mise en oeuvre du procédé selon l'une quelconque des revendications précédentes, comprenant :
- un plan de support (3) pour supporter un panneau (2) en position d'usinage ;
- une unité d'usinage (4) qui est déplaçable dans une direction d'usinage (G) parallèle au plan de support (3) pour usiner le panneau (2) sur le plan de support ;
- premier moyen de coupe (41) porté par ladite unité d'usinage (4) pour réaliser sur le panneau (2) une pré-incision qui est parallèle à ladite direction d'usinage (G) ;
- second moyen de coupe (42) porté par ladite unité d'usinage (4) et agencé aligné avec ledit premier moyen de coupe (41) dans ladite direction d'usinage (G) pour séparer une portion d'extrémité (5) du panneau au moyen d'une coupe de séparation réalisée le long de la pré-incision ;
dans lequel ledit premier moyen de coupe (41) est apte à effectuer des déplacements dans au moins une direction (K) transversalement au plan de support (3) de manière à déplacer l'axe de rotation (x-x) de celui-ci au moins entre une première position dans laquelle l'axe de rotation se trouve d'un côté du plan de support (3), et une seconde position dans laquelle l'axe de rotation (x-x) se trouve sur un côté opposé du plan de support (3) ;
**caractérisé en ce que** ledit premier moyen de coupe (41) comprend un disque rotatif (6) sur la périphérie duquel il y a un outil (7), ledit disque (6) étant accouplé de manière rotative sur une portion de moyeu (9) ayant une dimension axiale qui n'est pas supérieure à une dimension axiale maximale de fonctionnement dudit outil (7) pour permettre à ladite portion de moyeu (9) de passer à travers une coupe traversante réalisée par ledit outil (7).

10. Appareil selon la revendication 9, dans lequel ledit premier moyen de coupe (41) est apte à réaliser une coupe traversante dans ladite direction d'usinage (G) avec l'axe de rotation (x-x) dans ladite seconde position.

11. Appareil selon la revendication 9 ou 10, dans lequel ledit premier moyen de coupe (41) est apte à effectuer des déplacements dans ladite direction d'usinage (G) dans un sens pour réaliser une incision sur une face (21) de la portion d'extrémité (5) du panneau avec l'axe de rotation (x-x) dans ladite première position, et dans un sens opposé pour réaliser une coupe traversante avec l'axe de rotation (x-x) dans ladite seconde position.

12. Appareil selon l'une quelconque des revendications 9 à 11, dans lequel l'axe de rotation est en-dessous du plan de support (3) dans ladite première position et au-dessus du plan de support (3) dans ladite seconde position.

13. Appareil selon l'une quelconque des revendications 9 à 12, dans lequel ledit outil (7) est muni de deux lames circulaires (13 ; 14) de diamètres différents qui sont agencées adjacentes l'une à l'autre.

14. Appareil selon l'une quelconque des revendications 9 à 13, dans lequel ladite portion de moyeu (9) a un diamètre externe qui est supérieur à 20%, ou 30%, ou 40%, ou 50%, et/ou inférieur à 90%, ou 80%, ou 70%, ou 60%, du diamètre extérieur dudit outil (7).
